# EUROPEAN PATENT APPLICATION

(11) **EP 4 450 203 A1**
(43) Date of publication of application: **23.10.2024**
(21) Application number: 24171489.8
(22) Date of filing: 22.04.2024
(51) Int. Cl.: B23K 9/095, B23K 9/12, B23K 9/32, B23K 31/00

(54) **WELDING SYSTEM**

(30) Priority: 20.04.2023 KR 20230052298; 06.03.2024 KR 20240032089
(71) Applicant: Otos Wing Co., Ltd., Seoul 08521 (KR)
(72) Inventor: HUH, Moon Young, 08521 Seoul (KR); HUH, Sung Won, 06084 Seoul (KR)
(74) Representative: Meissner Bolte Partnerschaft mbB

(57) **Abstract**

A welding system (1) includes a welding information providing device (100) configured to generate and display information related to welding and a welding torch (200) configured to generate an electric arc in a welding base material, wherein the welding torch (200) includes a first panel unit (206) having mounted thereon a marker (206-1) configured to identify a welding location.

## Description

### BACKGROUND

### 1. Field

The disclosure relates to a welding system.

### 2. Description of the Related Art

Welding technology has become a core process in the manufacturing and construction fields. Welding is essential work for connecting metal parts and assembling structures and plays a very important role in satisfying various functions such as safety, durability, and sealability.

In general, welding relies on the experience and know-how of skilled welding operators, and setting exact locations of welding portions and correct welding conditions is considered a key factor. However, such welding has limitations in ensuring consistency and accuracy of welding operation. Manpower costs, safety issues, human errors during welding operation, and the like are raised as issues.

The foregoing background art is technical information that the inventor has possessed for derivation of the disclosure or has acquired during the derivation process of the disclosure, and may not be necessarily known art disclosed to the general public prior to the filing of the disclosure.

### SUMMARY

The objective of the disclosure is to improve welding accuracy and welding quality by tracking an exact location of a welding portion and adjusting welding operation accordingly.

The objective of the disclosure is to improve safety of a welding operation environment and ensure safety of a welding operator.

The objective of the disclosure is to improve an ability of a future welding operator by providing welding education content for educating a welding operator.

The objective of the disclosure is to quickly and accurately process a welding operation through welding automation according to tracking of an accurate location of a welding portion.

The problems to be solved by the disclosure are not limited to the problems mentioned above, and other problems and advantages of the disclosure that are not mentioned may be understood by the following description and more clearly understood by embodiments. In addition, it will be appreciated that the problems and advantages to be solved by the disclosure may be implemented by means and combinations thereof defined in claims.

Additional aspects will be set forth in part in the description which follows and, in part, will be apparent from the description, or may be learned by practice of the presented embodiments of the disclosure.

According to an aspect of the disclosure, a welding system includes a welding information providing device configured to generate and display information related to welding and a welding torch configured to generate an electric arc in a welding base material, wherein the welding torch includes a first panel unit having mounted thereon a marker configured to identify a welding location.

According to another aspect of the disclosure, a welding system includes a welding body including multiple axes and moving for welding and a welding rod extending from the welding body and configured to generate an electric arc in a welding base material, wherein the welding rod includes a second panel unit having mounted thereon a marker configured to identify a welding location.

In addition, another method for implementing the disclosure, another system, and a computer-readable recording medium recording thereon a program for executing the method may be further provided.

Other aspects, features and advantages other than those described above will become apparent from the following drawings, claims and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an example view of a welding environment according to an embodiment;
FIG. 2 is an example diagram of a welding system according to an embodiment;
FIG. 3 is a block diagram schematically illustrating a structure of a welding information providing device of the welding system of FIG. 1;
FIG. 4 is a perspective view of a welding information providing device of the welding system of FIG. 1;
FIGS. 5 and 6 are perspective views of a welding torch of the welding system of FIG. 1;
FIG. 7 is a block diagram schematically illustrating a structure of a welding torch of the welding system of FIG. 1;
FIG. 8 is an example view illustrating an operation of a welding information providing device of the welding system of FIG. 1;
FIG. 9 is a flowchart illustrating a method of operating a welding system, according to an embodiment;
FIG. 10 is an example diagram of a welding system according to an embodiment;
FIG. 11 is a block diagram schematically illustrating a structure of a welding management device of the welding system of FIG. 10;
FIG. 12 is an example view of a welding environment according to an embodiment;
FIG. 13 is a block diagram schematically illustrating a structure of a welding robot of a welding system according to an embodiment; and
FIG. 14 is an example diagram of a welding system according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Advantages and features of the disclosure, and methods of achieving the same will become clear with reference to the detailed description of embodiments taken in conjunction with the accompanying drawings. However, it should be understood that the disclosure is not limited to embodiments presented below, but may be implemented in various different forms, and includes all modifications, equivalents, and alternatives included in the spirit and scope of the disclosure. The embodiments presented below are provided to complete the disclosure and to fully inform those skilled in the art to which the disclosure belongs. When describing the disclosure, the detailed description of related known arts, which may obscure the subject matter of the disclosure, will be omitted.

Terms used herein are only used to describe particular embodiments, and are not intended to limit the disclosure. As used herein, the singular forms are intended to include the plural forms as well, unless the context clearly indicates otherwise. It will be further understood that the terms "comprises," "comprising," "have," and/or "having," when used herein, specify the presence of stated features, integers, steps, operations, elements, and/or components, but do not preclude the presence or addition of one or more other features, integers, steps, operations, elements, components, and/or groups thereof. Although the terms, "first", "second", etc. may be used herein to describe various elements, these elements should not be limited by these terms. These terms are only used to distinguish one element from another.

In addition, in the description, "-or" may be a hardware component such as a processor or circuit, and/or a software component executed by a hardware component such as a processor.

Hereinafter, embodiments according to the disclosure will be described in detail with reference to the accompanying drawings, and when describing with reference to the accompanying drawings, the same or corresponding components will be given the same reference numerals, and the same descriptions thereof will be omitted.

In the following embodiments, the terms first, second, etc. are used for the purpose of distinguishing one component from another component, not for the limited sense.

In the following embodiments, the singular forms are intended to include the plural forms as well, unless the context clearly indicates otherwise.

The terms "comprise", "include", and/or "have" when used herein, specify the presence of stated features, elements, and/or components, but do not preclude the presence or addition of one or more other features, elements, and/or components.

In the cases where an embodiment may be implemented differently, a particular process sequence may be performed differently from the described sequence. For example, two processes described in succession may be performed substantially at the same time, or may be performed in an order opposite to the order described.

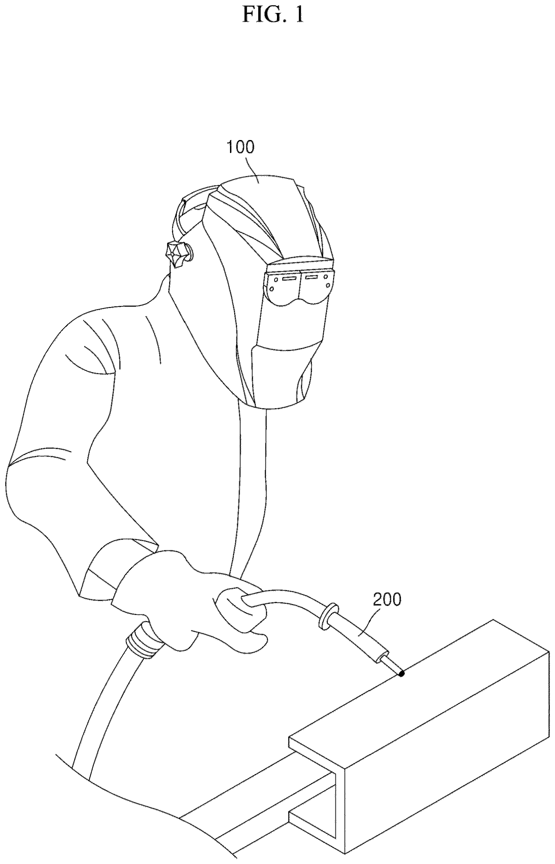

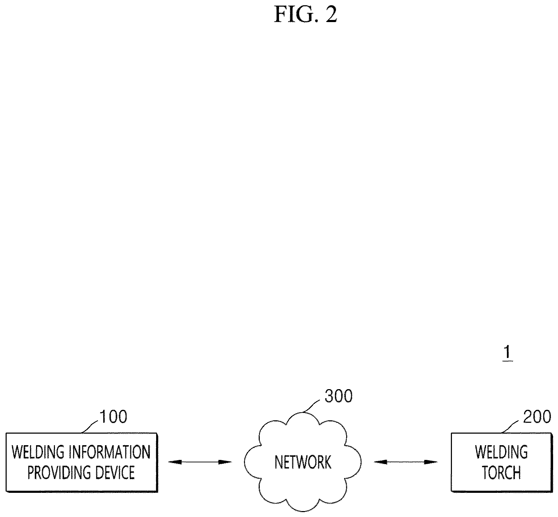

FIG. 1 is an example view of a welding environment according to an embodiment, and FIG. 2 is an example diagram of a welding system according to an embodiment. Referring to FIGS. 1 and 2, a welding system 1 according to an embodiment may include a welding information providing device 100, a welding torch 200, and a network 300.

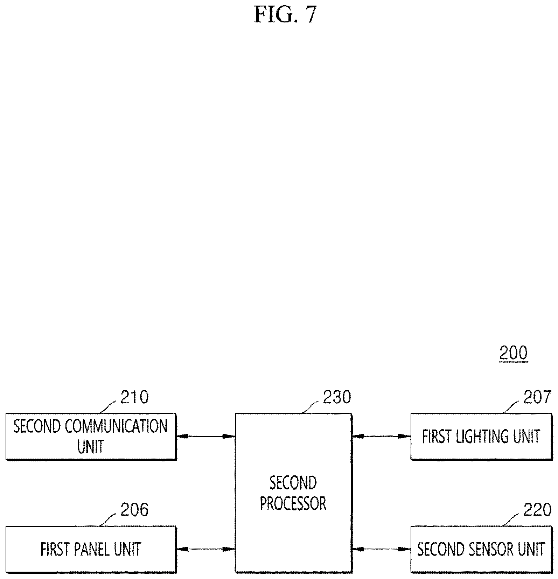

The welding information providing device 100 and the welding torch 200 may transmit and receive data to and from each other through the network 300. The welding information providing device 100 and the welding torch 200 may operate on a one-to-one match basis, but are not limited thereto, and may have a one-to-n relationship. In other words, n welding torches 200 may be connected to one welding information providing device 100, and one welding torch 200 may be connected to n welding information providing devices 100. In addition, the welding information providing device 100 and the welding torch 200 may communicate with a separate server (not shown) or a welding management device 400 of FIG. 7 to transmit and receive data thereto and therefrom. In some embodiments, the welding torch 200 may not have a communication function and thus may not perform communication.

The welding information providing device 100 may generate and display information related to welding. In some embodiments, the welding information providing device 100 may include a welding helmet. In some embodiments, the information related to welding may include marker-related information, information regarding a welding situation, welding guide information, welding advice information, and the like.

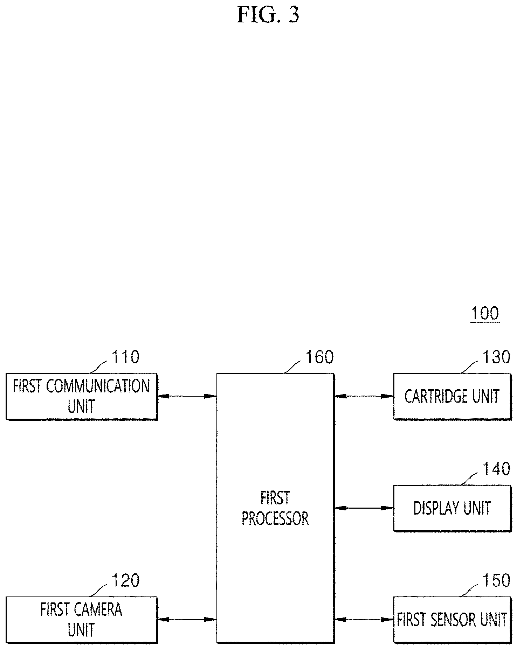

The welding information providing device 100 may provide an operator with the information regarding the welding situation. In detail, the welding information providing device 100 may acquire a welding image by using at least one camera (e.g., a first camera unit 120 of FIG. 3) mounted on the welding information providing device 100. The welding information providing device 100 may generate a synthesized image on the basis of the acquired welding image and display the generated synthesized image to the operator. The welding information providing device 100 may generate the synthesized image by using a high dynamic range (HDR) technology, and may display and provide a high-definition synthesized image to the operator. The operator may visually identify via the high-definition synthesized image, information regarding a surrounding environment in addition to a shape of a welding bead and a portion adjacent to welding light.

In some embodiments, the welding information providing device 100 may acquire the welding image by arranging the camera at a location equivalent to a field of view of the operator. Accordingly, the welding information providing device 100 may provide more accurate welding information to the operator by acquiring the welding image similar to when the operator directly looks at a work site.

In some embodiments, the welding information providing device 100 may acquire images through two or more cameras to synthesize and provide high-definition welding images. The welding information providing device 100 may display, through at least one display unit 140 of FIG. 3, the respective images acquired through the two or more cameras. In some embodiments, the two cameras may be respectively arranged at locations corresponding to the left eye and the right eye of the operator. Here, the welding information providing device 100 may synthesize images by repeatedly capturing images with different shutter speeds, ISO sensitivities, and gain values of respective cameras. In some embodiments, the welding information providing device 100 may improve image quality through contrast ratio processing on the acquired synthesized image.

The welding information providing device 100 may provide a function of displaying welding information in a preferred color (e.g., green or blue) by using RGB. In addition, the welding information providing device 100 may provide a magnifying glass power correction function (e.g., screen enlargement and reduction). In addition, the welding information providing device 100 of the disclosure may provide a temperature synthesized image by using a separate thermal imaging camera. Here, the welding information providing device 100 may display a welding temperature in a color. The welding information providing device 100 of the disclosure may support a function of providing a sound (e.g., a guidance alarm) or a guidance voice for all the functions described above.

The welding torch 200 may generate an electrical arc in a welding base material. The welding torch 200 may detect, via at least one sensor, the information regarding the welding situation including one or more of a welding location, a welding direction, a welding angle, a welding inclination, and a welding speed for real-time welding operation, and a distance between the welding base material and the welding torch 200. In an optional embodiment, the welding torch 200 may calculate or generate the information regarding the welding situation by using a signal detected through the at least one sensor. The welding torch 200 may monitor a state of the welding torch 200 and change a set value of torch work according to the information regarding the welding situation.

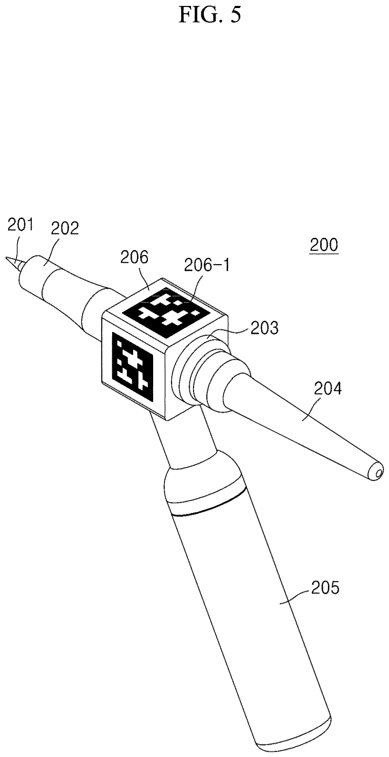

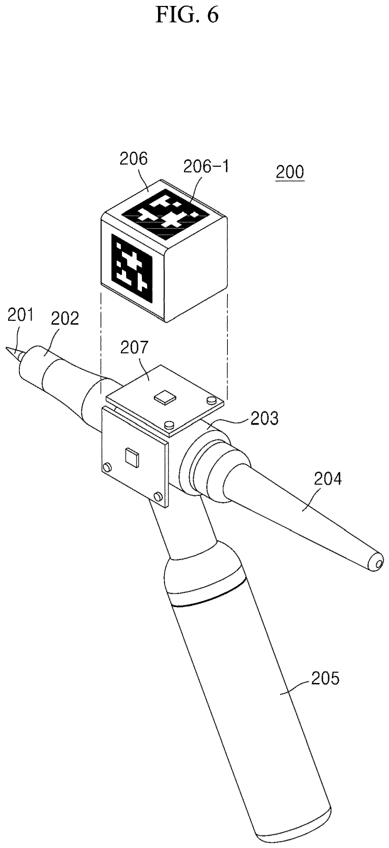

The welding torch 200 may include a first panel unit 206 of FIG. 5 having mounted thereon a marker 206-1 of FIG. 5 for identifying the welding location. A first lighting unit 207 of FIG. 6 may be provided underneath the first panel unit 206. The first lighting unit 207 may supply lighting to the first panel unit 206. Therefore, a location of the welding torch 200 may be clearly recognized in a dark environment.

The marker 206-1 included in the first panel unit 206 may include a visually identifiable pattern. The marker 206-1 may include a unique identifier. The unique identifier may be used to identify the marker 206-1 and distinguish information or work linked to the marker 206-1.

In some embodiments, a rotation angle of the welding torch 200 may be calculated by using the marker 206-1 included in the first panel unit 206. In some embodiments, a location of the first panel unit 206 and a distance of the first panel unit 206 to a welding rod 201 of FIG. 5 may be preset.

In some embodiments, the welding information providing device 100 may receive information regarding work setting and a work state from the welding torch 200 through the network 300 connected to the welding torch 200. The welding information providing device 100 may provide work information to the operator via visual feedback, on the basis of received welding information.

For example, when receiving sensing information regarding a welding temperature value, the welding information providing device 100 may output a notification corresponding to the welding temperature value in various methods such as light, vibration, and a message. Here, the notification may be visual feedback provided to the display unit 140 or display of the welding information providing device 100, and may be auditory feedback through a sound (e.g., a guidance alarm) or guidance voice through a speaker (not shown).

Meanwhile, the sensing information regarding the welding temperature value may include information regarding whether or not the welding temperature value exceeds a preset temperature range. In addition, the sensing information regarding the welding temperature value may include a numerical value, a grade, a level, and the like corresponding to a temperature value of a welding surface.

When determining that the temperature values of the welding torch 200 and the welding surface are out of the preset temperature range, the welding information providing device 100 may guide the operator to stop the work. In some embodiments, when welding is out of the preset temperature range, quality of welding may be deteriorated, and thus, a guide may be provided to allow the operator to adjust the welding temperature value of the welding torch 200.

In some embodiments, the guiding described above or described below may include signal processing by which the welding information providing device 100 provides the operator with welding guide information requested or indicated so that the operator may perform accurate welding during welding operation. In some embodiments, the welding guide information may include one or more of an operation instruction, an operation change, and an operation stoppage.

In some embodiments, the work instruction may include visually guiding, to the display unit 140, a particular point or path to be welded. The work change may include, for example, visually guiding, to the display unit 140, a changed location or a welding speed to be adjusted in the case where the location to be welded is changed or the welding speed needs to be adjusted. The work stop may include, for example, visually guiding, to the display unit 140, an instruction to warn the operator or instruct the operator to stop the work when a dangerous situation or malfunction is detected during the welding operation. The welding guide information may be output visually as well as audibly.

In the case where detecting that a current or voltage state of the welding torch 200 is abnormal, the welding information providing device 100 may provide visual feedback for a warning. Here, the visual feedback may provide an icon indicating danger in a partial region of the display unit 140 of the welding information providing device 100, which displays a work site. As another example, the welding information providing device 100 may provide a work stop guide through the visual feedback by repeatedly increasing and decreasing saturation of a particular color (e.g., red) on the entire screen of the display unit 140.

In some embodiments, the welding information providing device 100 may detect the information regarding the welding situation through at least one sensor (e.g., a first sensor unit 150 of FIG. 3) included in the welding information providing device 100 in addition to at least one sensor (not shown) included in the welding torch 200. Here, the information regarding the welding situation may include one or more of the welding location, the welding direction, the welding angle, the welding inclination, the welding speed, and the distance between the welding base material and the welding torch 200, which are related to the real-time welding operation. In an optional embodiment, the welding information providing device 100 may calculate or generate the information regarding the welding situation by using a signal detected through at least one sensor.

The welding torch 200 may include at least one of all types of sensors capable of detecting state changes. For example, sensors provided in the welding torch 200 may include an acceleration sensor, a gyro sensor, an illuminance sensor, a proximity sensor, a pressure sensor, a noise sensor, a video sensor, and/or a gravity sensor. A light level within a welding operation region, which is detected via the illuminance sensor of the welding torch 200, may be transmitted to a first processor 160 of FIG. 3 through a first communication unit 110 of FIG. 3, and the first processor 160 may control a first camera unit 120 of FIG. 3 on the basis of the light level transmitted via the illuminance sensor of the welding torch 200 rather than the sensor unit 150 of FIG. 2 of the welding information providing device 100.

Meanwhile, the acceleration sensor may be a component for sensing movement of the welding torch 200. In detail, the acceleration sensor may measure a dynamic force such as acceleration, vibration, or impact of the welding torch 200 and thus may measure the movement of the welding torch 200. The gravity sensor may be a component for detecting a direction of gravity. The result of detection by the gravity sensor may be used together with the acceleration sensor to determine the movement of the welding torch 200. In addition, a direction in which the welding torch 200 is gripped may be determined via the gravity sensor.

In addition to the types of sensors described above, the welding torch 200 may further include various types of sensors such as a gyroscope sensor, a geomagnetic sensor, an ultrasonic sensor, and an RF sensor, and may detect various changes related to a welding operation environment.

Similarly, the welding information providing device 100 may provide a guide corresponding to the information regarding the welding situation, on the basis of information regarding a welding situation, which is detected through a sensor included in the welding information providing device 100, and information regarding a welding situation, which is detected through a sensor included in the welding torch 200.

After a guide for the work stop is provided, the welding information providing device 100 may provide a guide for changing an operation of the welding torch 200 by sensing movement of a preset user, a voice of the preset user, or the like.

When communication with the welding torch 200 is not smooth, the welding information providing device 100 may acquire temperature values of the welding torch 200 and the welding surface through image sensing provided therein. As an example, the welding information providing device 100 may acquire the temperature values of the welding torch 200 and the welding surface on the basis of image data acquired through a thermal imaging camera.

The above-described example describes only the case where information received from the welding torch 200 is welding temperature information, and the welding information providing device 100 may provide various guides for various types of welding information.

The welding information providing device 100 may generate the welding guide information by using information regarding a distance from the welding base material to the welding information providing device 100, a result of detecting the information regarding the welding situation, and preset distance information between the welding rod 201 and the first panel unit 206. The welding information providing device 100 may output the welding guide information to the display unit 140.

The network 300 may connect the welding information providing device 100 to the welding torch 200. The network 300 may include, for example, a wired network such as a local area network (LAN), a wide area network (WAN), a metropolitan area network (MAN), or an integrated service digital network (ISDN), or a wireless network such as a wireless LAN (WLAN), code-division multiple access (CDMA), or satellite communication, but the scope of the disclosure is not limited thereto. In addition, the network 300 may transmit and receive information by using short-range communication and/or long-range communication. Here, the short-range communication may include Bluetooth, radio frequency identification (RFID), infrared data association (IrDA), ultra-wideband (UWB), ZigBee, and Wi-Fi technologies, and the long-range communication may include code-division multiple access (CDMA), frequency-division multiple access (FDMA), timedivision multiple access (TDMA), orthogonal frequency-division multiple access (OFDMA), and single carrier frequency-division multiple access (SC-FDMA) technologies.

The network 300 may include connections of network elements such as a hub, a bridge, a router, and a switch. The network 300 may include one or more connected networks, such as a public network such as the Internet and a private network such as a secure corporate private network, e.g., a network environment. Access to the network 300 may be provided through one or more wired or wireless access networks.

In addition, the network 300 may support controller area network (CAN) communication, vehicle to infrastructure (V2l) communication, vehicle to everything (V2X) communication, and wireless access in vehicular environment communication technologies, an Internet of Things (loT) network that exchanges and processes information between distributed components such as objects, and/or 5G communication.

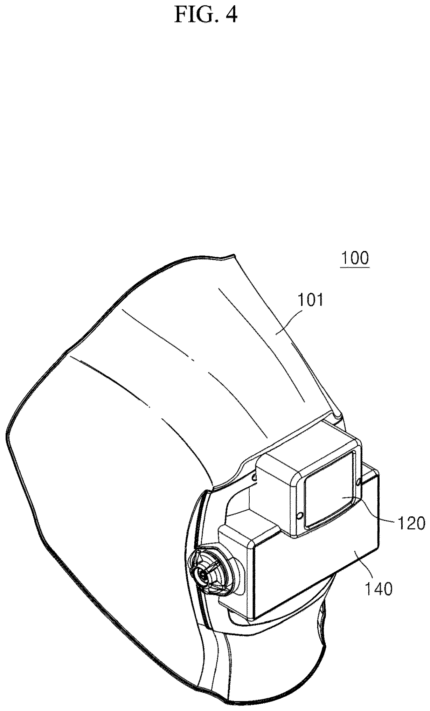

FIG. 3 is a block diagram schematically illustrating a structure of a welding information providing device of the welding system 1 of FIG. 1, and FIG. 4 is a perspective view of a welding information providing device of the welding system 1 of FIG. 1. The same descriptions of FIGS. 3 and 4 as the descriptions of FIGS. 1 and 2 are omitted below. Referring to FIGS. 3 and 4, a welding information providing device 100 may include a first communication unit 110, a first camera unit 120, a cartridge unit 130, the display unit 140, the first sensor unit 150, and a first processor 160.

The first communication unit 110 may be linked with the network 300 to provide a communication interface needed to provide a signal transmitted and received between the welding information providing device 100 and the welding torch 200 in the form of packet data. The first communication unit 110 may receive information regarding a welding situation from the welding torch 200 and transmit a command for controlling the welding torch 200. In some embodiments, the command for controlling the welding torch 200 may include welding guide information. In some embodiments, the first communication unit 110 may transmit the welding guide information to an external device other than the welding torch 200. Here, the external device may include various types of devices including a communication module, such as a smartphone and a computer of an operator/third party.

The first communication unit 110 may be a component for performing communication with various types of external devices according to various types of communication methods. The first communication unit 110 may include at least one of a Wi-Fi chip, a Bluetooth chip, a wireless communication chip, and a near field communication (NFC) chip. In particular, when using the Wi-Fi chip or the Bluetooth chip, various types of connection information such as an SSID and a session key may be first transmitted and received, and may be used to connect communication and then transmit and receive various types of information. The wireless communication chip may refer to a chip that performs communication according to various communication standards such as IEEE, Zigbee, 3rd Generation (3G), 3rd Generation Partnership Project (3GPP), and long term evolution (LTE). The NFC chip may refer to a chip that operates in an NFC method using a 13.56 MHz band from among various RF-ID frequency bands such as 135 kHz, 13.56 MHz, 433 MHz, 860 MHz to 960 MHz, and 2.45 GHz.

The first camera unit 120 may include at least one camera and may capture an image of a welding operation site. The first camera unit 120 may be a camera located adjacent to the display unit 140 of the welding information providing device 100. As another embodiment, the first camera unit 120 may be detachably formed and may be mounted by changing a location thereof as needed. As described above, the first camera unit 120 may be mounted to be located adjacent to the display unit 140, but may be mounted by changing the location thereof to a side portion of a main body 101 as needed. Alternatively, the first camera unit 120 may be mounted on an upper portion of the main body 101, i.e., on the head of the operator. The camera unit 110 may receive a control command from the first processor 160 and capture the image of the welding operation site by changing settings such as a shutter speed, ISO sensitivity, and gain in response to the control command. The camera unit 110 may include two or more cameras and may capture the image of the welding operation site through different capturing settings.

In some embodiments, the first camera unit 120 may include a thermal imaging camera. The welding information providing device 100 may acquire a temperature image by synthesizing a thermal image acquired through the thermal imaging camera with the image of the welding operation site.

In some embodiments, the welding information providing device 100 may further include a lighting unit (not shown) electrically connected to the first processor 160. The lighting unit (not shown) may be located on an outer side pf the welding information providing device 100 and may be configured to irradiate light toward at least a welding operation region. The lighting unit (not shown) may include a plurality of LED modules. An output level of light irradiated through the lighting unit (not shown) may be adjusted under control of the first processor 160. According to an embodiment, the lighting unit (not shown) may operate in conjunction with an operation of the first camera unit 120 under control of the first processor 160.

The cartridge unit 130 may block welding light generated when welding occurs. In other words, the cartridge unit 130 may increase a light blocking degree of a cartridge on the basis of welding light information detected through the first sensor unit 150, e.g., one or more of an image sensor, a photosensor, and an optical sensor. Here, the cartridge unit 130 may include, for example, a liquid crystal display (LCD) panel of which blackening degree may be adjusted according to an alignment direction of liquid crystals. For example, the cartridge unit 130 may be implemented with various panels such as a vertical align (VA) type LCD, a twist nematic (TN) type LCD, and an in plane switching (IPS) type LCD.

The blackening degree of the cartridge unit 130 may be automatically adjusted according to brightness of the welding light. As described above, in the case where the blackening degree of the cartridge unit 130 is automatically adjusted according to the brightness of the welding light, the sensor unit 150 may be used. When the sensor unit 150 acquires welding light information by detecting an intensity of light of the welding light and transmits, to the processor 160, information regarding the intensity of the welding light included in the welding light information as a certain electrical signal, the first processor 160 may control the blackening degree on the basis of the intensity of the welding light.

In other words, the cartridge unit 130 may change a light blocking degree of a panel in real time to correspond to an intensity of light generated from a welding surface at the welding operation site, and the first camera unit 120 may capture a welding image in which a certain amount of welding light is blocked by the cartridge unit 130 installed on a front surface portion thereof.

In an optional embodiment, the light blocking degree of the cartridge unit 130 may be manually adjusted by the operator. As an embodiment, when the operator determines that the welding light is too bright while performing the welding operation and selects a desired light blocking degree by using an input device (e.g., a jog shuttle (not shown) or the like) that may adjust a light blocking degree to 6, 7, 8, 9, or the like, the first processor 160 may control the light blocking degree of the cartridge unit 130 in response to the light blocking degree selected by the input device.

In an optional embodiment, the welding information providing device 100 may have a structure in which the first camera unit 120 is located adjacent to the cartridge unit 130. In addition, the welding information providing device 100 may not include the cartridge unit 130. Here, the operator may perform the welding operation only with the welding image acquired through the first camera unit 120, and the first processor 160 may perform blackening processing on the welding image on the basis of the brightness of the welding light detected by the first sensor unit 150 and output the blackened image to the display unit 140. In other words, in the case where the first processor 160 has a blackening processing function, the cartridge unit 130 may not be included.

The display unit 140 may provide a high-definition synthesized image to the operator. In detail, the display unit 140 may include a display for displaying, to the operator, a synthesized image obtained by synthesizing images acquired through the first camera unit 120.

In some embodiments, the display unit 140 may provide a welding image more enlarged than a currently displayed welding image and may provide a reduced welding image obtained by reducing the enlarged welding image. The enlargement or reduction of the welding image may be determined by the first processor 160 or may be determined by a request of the operator.

The display included in the display unit 140 may display the high-definition synthesized image so that the operator may visually identify a surrounding environment (e.g., a shape of a previously worked welding bead or the like) other than a portion adjacent to the welding light. In addition, the display unit 140 may guide the operator with visual feedback on a welding progress state (e.g., a welding progress direction).

The display included in the display unit 140 may be implemented with various display technologies such as a liquid crystal display (LCD), organic light emitting diodes (OLED), a light-emitting diode (LED), liquid crystal on silicon (LcoS), and digital light processing (DLP). Here, the display according to an embodiment may be implemented as a panel made of an opaque material, and the operator may not be directly exposed to harmful light. However, the display is not necessarily limited thereto and may be provided as a transparent display.

The first sensor unit 150 may include a plurality of sensor modules configured to detect various types of information regarding a welding site and acquire information regarding a welding situation. In addition, the first sensor unit 150 may include an optical sensor configured to detect a light level at least within a welding operation region. In an optional embodiment, the first sensor unit 150 may detect various types of information regarding the welding site and transmit the detected information to the first processor 160, and the first processor 160 may calculate or generate the information regarding the welding situation described above, on the basis of the result of detection received from the first sensor unit 150.

According to an embodiment, the first sensor unit 150 may include an illuminance sensor, and at this time, the first sensor unit 150 may acquire information regarding the intensity of the welding light at the welding site. The first sensor unit 140 may further include various types of sensors such as a proximity sensor, a noise sensor, a video sensor, an ultrasonic sensor, and an RF sensor, in addition to the illuminance sensor, and may detect various changes related to a welding operation environment.

The first processor 160 may synthesize welding image frames received via the first camera unit 120 to generate the high-definition synthesized image. The first processor 160 may acquire the synthesized image by in parallel synthesizing frames which are acquired, by the first camera unit 120, in time order while setting different capturing conditions for respective frames. In detail, the first processor 160 may control the first camera unit 120 to perform capturing by changing a shutter speed, ISO sensitivity, and gain of the first camera unit 120.

Here, the first processor 150 may differently set capturing conditions according to conditions such as sensed welding light at the welding site, ambient light, and the degree of movement of the welding torch 200. In detail, the first processor 160 may set the capturing conditions such that the ISO sensitivity and the gain are reduced when the welding light and/or ambient light at the welding site increase. In addition, when detecting that the movement and/or work speed of the welding torch 200 are fast, the first processor 160 may set the capturing conditions to increase the shutter speed.

The first processor 160 may in parallel synthesize images having a preset number of frames. In some embodiments, respective images within set frames may be captured under different capturing conditions.

In the case where the number of camera units 120 is two or more, the first processor 160 may control the respective camera units 120 to set different capturing conditions and capture images. Even in this case, the first processor 160 may in parallel synthesize images having a preset number of frames .

The first processor 160 may receive an image of the first panel unit 206 provided in the welding torch 200, which is captured by the first camera unit 120, and generate marker-related information including one or more of marker location information, torch direction information, and information regarding a distance from a welding base material to a welding information providing device.

In some embodiments, the marker location information may include information indicating which portion of the welding torch 200 the marker 206-1 is located. A detailed description of generating the marker location information by the first processor 160 is as follows. The first processor 160 may identify the marker 206-1. The first processor 160 may identify the marker information from an image frame of the first panel unit 206 captured by the first camera unit 120. Here, the marker information may include a pattern, a feature, or an identifier. Subsequently, the first processor 160 may calculate a twodimensional (2D) image location for the marker 206-1. The first processor 160 may calculate the 2D image location indicating where the marker 206-1 is on a screen of the first camera unit 120. Here, the 2D image location of the marker 206-1 may be calculated on the basis of a center or particular point of the marker 206-1. Subsequently, the first processor 160 may estimate camera parameter information regarding the first camera unit 120. Here, the camera parameter information may include internal parameter information and external parameter information. The internal parameter information may include information regarding internal characteristics of a camera which are related to distortion of a lens, a focal length, a resolution of an image sensor, and the like. The external parameter information may be information regarding a location and direction of the camera and may include a three-dimensional (3D) location indicating which direction the camera faces at which location. Subsequenlty, the first processor 160 may convert a 2D location of the marker 206-1 into a 3D location. The first processor 160 may convert the 2D image location of the marker 206-1 into a 3D space by using the camera parameter information. In detail, the first processor 160 may map a location of the marker 206-1 on a 2D image into a 3D space by considering a location and direction of the first camera unit 120. Subsequently, the first processor 160 may calculate a 3D location of the marker 206-1. The 3D location of the marker 206-1 may indicate a relative location between the first camera unit 120 and the marker 206-1. The 3D location of the marker 206-1 may be expressed as X, Y, Z coordinates. The 3D location of the marker 206-1 may indicate which portion of the welding torch 200 the marker 206-1 is located at. Subsequently, the first processor 160 may calculate a relative location between the marker 206-1 and the welding torch 200 by using 3D location information regarding the marker 206-1. The relative location between the marker 206-1 and the welding torch 200 may accurately indicate which portion of the welding torch 200 the marker 206-1 is located at. Subsequently, the first processor 160 may update location information regarding the marker 206-1 in real time and track movement of the marker 206-1.

In some embodiments, the torch direction information may include information indicating which direction the welding rod 201 faces on a weldment base material. A detailed description of generating the torch direction information by the first processor 160 is as follows. The first processor 160 may identify the marker 206-1. Subsequently, the first processor 160 may calculate the 2D image location of the marker 206-1. Subsequently, the first processor 160 may estimate the camera parameter information regarding the first camera unit 120. Subsequently, the first processor 160 may convert the 2D location of the marker 206-1 into the 3D location. Subsequently, the first processor 160 may calculate a 3D direction vector of the marker 206-1. Subsequently, the first processor 160 may calculate a first vector as a vector from the marker 206-1 to the first camera unit 120 by using the 3D location of the marker 206-1 and a 3D location of the first camera unit 120. Subsequently, a second vector as a vector perpendicular to the direction vector of the first camera unit 120 may be calculated by using the 2D location of the marker 206-1. Here, the second vector may be a direction from the first camera unit 120 toward the marker 206-1. Subsequently, a torch direction vector may be calculated by using a cross product of the first vector and the second vector. Here, a cross_product function may be used to obtain the cross product.

In an optional embodiment, the first processor 160 may calculate a torch angle by using the torch direction information described above. The first processor 160 may calculate a dot product of a normalized first vector and a normalized second vector. Subsequently, the first processor 160 may calculate an the torch angle by using a dot product value and an inverse cosine function.

In some embodiments, the distance information may include information indicating a distance from the welding base material to the welding information providing device 100. In detail, the distance information may include information indicating a distance from the welding base material to the first camera unit 120 provided in the first processor 160. In some embodiments, the distance information may include a result of summing preset distance information (e.g., 10 cm as a numerical limit) between the welding rod 201 and the first panel unit 206 provided with the marker 206-1 and information regarding a distance from the marker 206-1 to the first camera unit 120. A detailed description of generating the distance information by the first processor 160 is as follows. The first processor 160 may detect the marker 206-1 by applying an image processing technology and a vision technology to an image frame of the first panel unit 206 captured by the first camera unit 120. Subsequently, the first processor 160 may estimate the camera parameter information regarding the first camera unit 120. Subsequently, first processor 160 may calculate the 2D image location of the marker 206-1. Subsequently, the first processor 160 may calculate the information regarding a distance from the marker 206-1 to the first camera unit 120 by using the 2D image location and the camera parameter information. The distance from the marker 206-1 to the first camera unit 120 may be calculated as a value obtained by dividing the product of an actual marker size and a focal length by an image size of the marker 206-1. Here, the actual marker size may indicate a preset actual size of the marker 206-1. The focal length may indicate a focal length of the first camera unit 120. The image size of the marker 206-1 may indicate a 2D image size of the marker 206-1 calculated from a marker image. Subsequently, the first processor 160 may calculate the information regarding a distance from the welding base material to the welding information providing device 100 by summing the preset distance information between the welding rod 201 and the first panel unit 206 provided with the marker 206-1 and the information regarding a distance from the marker 206-1 to the first camera unit 120.

The first processor 160 may receive, from one or more of the first camera unit 120, at least one sensor provided in the first sensor unit 150, and at least one sensor provided in the welding torch 200, a result of detecting the information regarding the welding situation including one or more of a welding location, a welding direction, a welding angle, a welding inclination, a welding speed, and a distance between the welding base material and the welding torch 200. In an optional embodiment, the first processor 160 may calculate or generate the information regarding the welding situation described above on the basis of a signal received from one or more of the first camera unit 120, the at least one sensor provided in the first sensor unit 150, and the at least one sensor provided in the welding torch 200.

On the basis of the marker-related information and the information regarding the welding situation, the first processor 160 may generate welding guide information for guiding the information regarding the welding situation on the basis of welding guide information including one or more of an operation instruction, an operation change, and an operation stoppage and output the welding guide information to the display unit 140.

The first processor 160 may control an overall operation of the welding information providing device 100 by using various types of programs stored in a memory (not shown). The memory may be operatively connected to the first processor 160 and may store at least one code in association with an operation performed by the first processor 160. In addition, the memory may perform a function of temporarily or permanently storing data processed by the first processor 160.

The first processor 160 may include a central processing unit (CPU), random access memory (RAM), read only memory (ROM), and a system bus. Here, the ROM may be a component that stores a set of commands for system booting, and the CPU may copy an operating system (O/S) stored in the memory of the welding information providing device 100 into the RAM according to the commands stored in the ROM, and may boot a system by executing the O/S. When booting is completed, the CPU may perform various operations by copying various types of applications stored in the memory into the RAM and executing the copied applications. The first processor 160 is described above as including only one CPU, but may be implemented with a plurality of CPUs (or DSPs, SoCs, or the like).

In some embodiments, the first processor 160 may be implemented as a digital signal processor (DSP) for processing a digital signal, a microprocessor, and/or a time controller (TCON). However, the first processor 160 is not limited thereto and may include one or more of a CPU, a micro controller unit (MCU), a micro processing unit (MPU), a controller, an application processor (AP) or a communication processor (CP), and an advanced RISC machine (ARM) processor, or may be defined as the corresponding term. In addition, the first processor 160 may be implemented as a system on chip (SoC) having a processing algorithm provided therein, or large scale integration (LSI), or may be implemented in the form of a field programmable gate array (FPGA).

FIGS. 5 and 6 are perspective views of a welding torch of the welding system 1 of FIG. 1. The same descriptions of FIGS. 5 and 6 as the descriptions of FIGS. 1 to 4 are omitted below. Referring to FIGS. 5 and 6, a welding torch 200 may include the welding rod 201, a torch head 202, a guide portion 203, a back cap 204, a handle portion 205, a first panel unit 206, and a first lighting unit 207.

The welding rod 201 may generate an electrical arc in response to an input from a button provided on the handle portion 205. A front end of the welding rod 201 may be fixed in a state of protruding from the front of the torch head 202 or may be fixed in a state of being inserted into the torch head 202. The welding rod 201 may include a tungsten electrode.

The welding rod 201 may be provided on one side of the torch head 202, and the guide portion 203 may be provided on the other side of the torch head 202. The torch head 202 may be provided on one side of the guide portion 203, and the back cap 204 may be provided on the other side of the guide portion 203. A handle may be provided under the guide portion 203.

In some embodiments, the first panel unit 206 may be provided on an outer side of the guide portion 203 provided between the torch head 202 and the back cap 204. The first panel unit 206 may be provided with the marker 206-1 for identifying a welding location. In some embodiments, the marker 206-1 may include a visual pattern or marker. The marker 206-1 may include an augmented reality (AR) marker.

The marker 206-1 may include a visually identifiable pattern. The marker 206-1 may include a unique identifier. The unique identifier may be used to identify the marker 206-1 and distinguish information or work connected to the marker 206-1. The first camera unit 120 may photograph the marker 206-1 included in the first panel unit 206.

In some embodiments, the first panel unit 206 may be provided on one or more of a plurality of surfaces surrounding the outer side of the guide portion 203. The handle portion 205 may be provided under the guide portion 203, and thus, three first panel units 206 may be provided on a left side, a right side, and an upper side of the guide portion 203. Accordingly, the number of markers 206-1 may also be the same as the number of the first panel units 206.

In some embodiments, the first lighting unit 207 may be provided between the guide portion 203 and the first panel unit 206. In other words, the first lighting unit 207 may be provided underneath the first panel unit 206. The first lighting unit 207 may supply lighting to the first panel unit 206. In some embodiments, the number of the first lighting units 207 may be the same as the number of the first panel units 206.

FIG. 7 is a block diagram schematically illustrating a structure of a welding torch of the welding system 1 of FIG. 1. The same description of FIG. 7 as the descriptions of FIGS. 1 to 6 is omitted below. Referring to FIG. 7, a welding torch 200 may include a second communication unit 210, a second sensor unit 220, and a second processor 230.

The second communication unit 210 may be linked with the network 300 to provide a communication interface needed to provide a signal transmitted and received between the welding information providing device 100 and the welding torch 200 in the form of packet data. The second communication unit 210 may transmit information regarding a welding situation to the welding information providing device 100 according to a request of the welding information providing device 100. The second communication unit 210 may receive a command for controlling the welding torch 200 from the welding information providing device 100. In some embodiments, the command for controlling the welding torch 200 may include welding guide information. In some embodiments, the second communication unit 210 may transmit the welding guide information to an external device other than the welding torch 200. Here, the external device may include various types of devices including a communication module, such as a smartphone and a computer of an operator/third party.

The second communication unit 210 may include a module capable of short-range wireless communication (e.g., Bluetooth, Wi-Fi, Wi-Direct), long-range wireless communication (e.g., 3 G, high-speed downlink packet access (HSDPA), or LTE.

The second sensor unit 220 may be included in the welding torch 200 and may detect the information regarding the welding situation including a welding temperature, a welding speed, a welding inclination, a welding direction, a distance between a base material and the welding torch 200, and the like.

The second sensor unit 220 may detect at least one of various changes such as a change in posture of the operator holding the welding torch 200, a change in roughness of a welding surface, and a change in acceleration of the welding torch 200, and may transmit, to the second processor 230, an electrical signal corresponding thereto. In other words, the second sensor unit 220 may detect a change in a state based on the welding torch 200, generate a detection signal accordingly, and transmit the generated detection signal to the second processor 230.

In some embodiments, the second sensor unit 220 may include various types of sensors and may detect a change in a state of the welding torch 200 when power is supplied to at least one preset sensor according to control (or on the basis of user setting) during driving of the welding torch 200.

In this case, the second sensor unit 220 may include at least one device from among all types of sensing devices capable of detecting a change in a state of the welding torch 200. For example, the second sensor unit 220 may include at least one sensor from among various sensing devices such as an acceleration sensor, a gyro sensor, an illuminance sensor, a proximity sensor, a pressure sensor, a noise sensor, a video sensor, and a gravity sensor. A light level within a welding operation region, which is detected via the illuminance sensor of the welding torch 200, may be transmitted to the first processor 160 through the second communication unit 210, and the first processor 160 may control a lighting unit (not shown) and/or the first camera unit 120 on the basis of the light level transmitted via the illuminance sensor of the welding torch 200 rather than the first sensor unit 150 of the welding information providing device 100.

Meanwhile, the acceleration sensor may detect movement of the welding torch 200. In detail, the acceleration sensor may measure a dynamic force such as acceleration, vibration, or impact of the welding torch 200 and thus may measure the movement of the welding torch 200.

The gravity sensor may be a component for detecting a direction of gravity. In other words, the result of detection by the gravity sensor may be used together with the acceleration sensor to determine the movement of the welding torch 200. In addition, a direction in which the welding torch 200 is gripped may be determined via the gravity sensor.

In addition to the types of sensors described above, the welding torch 200 may further include various types of sensors such as a gyroscope sensor, a geomagnetic sensor, an ultrasonic sensor, and an RF sensor and may detect various changes related to a welding operation environment.

The second processor 230 may control to transmit, to the welding information providing device 100, a signal detected by the second sensor unit 220 and/or the information regarding the welding situation according to a request of the welding information providing device 100. In an optional embodiment, the second processor 230 may calculate or generate the information regarding the welding situation.

When an input from a button provided on the handle portion 205 is received, the second processor 230 may generate an electric arc through the welding rod 201. In addition, when the input from the button provided on the handle unit 205 is received, the second processor 230 may control the lighting unit 207 to operate. When an input release from the button provided on the handle portion 205 is received, the second processor 230 may control the lighting unit 207 to end an operation thereof.

The second processor 230 may control an overall operation of the welding torch 200 by using various types of programs stored in a memory (not shown). The memory may be operatively connected to the second processor 230 and may store at least one code in association with an operation performed by the second processor 230. In addition, the memory may perform a function of temporarily or permanently storing data processed by the second processor 230.

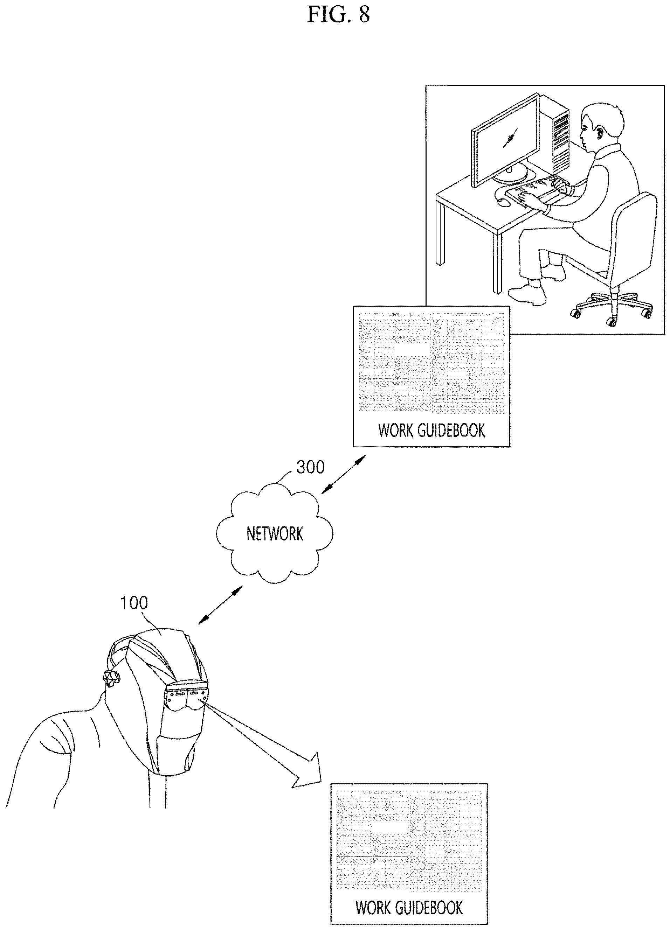

FIG. 8 is an example view illustrating an operation of a welding information providing device of the welding system 1 of FIG. 1. The same description of FIG. 8 as the descriptions of FIGS. 1 to 7 is omitted below.

FIG. 8 illustrates that a welding information providing device 100 may receive and display a work guidebook. The welding information providing device 100 may output, to the display unit 140, the work guidebook received from an external device through wireless communication so that an operator may view the work guidebook. When the reception of the work guidebook by the first communication unit 110 is identified, the first processor 160 may display the same on the display unit 140.

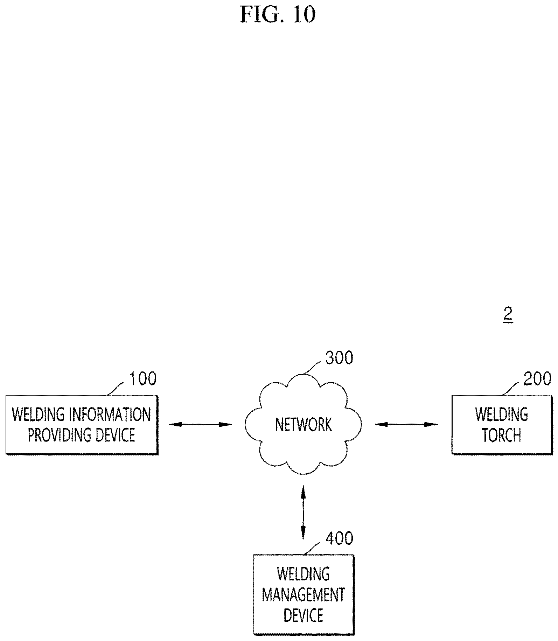

Here, the external device may include various types of electronic devices including a communication module, such as a smartphone and a computer of an operator/third party. In addition, the external device may include a separate server (not shown) or a welding management device 400 of FIG. 10. In some embodiments, the work guidebook may include a welding procedure specification (WPS), a procedure qualification record (PQR), or the like which describes in detail all welding conditions demanded for a welding portion.

The first processor 160 may generate welding guide information for guiding information regarding a welding situation on the basis of the work guidebook and marker-related information and output the welding guide information to the display unit 140.

The operator may perform substantial welding operation by referring to the work guidebook output to the display unit 140 of the welding information providing device 100.

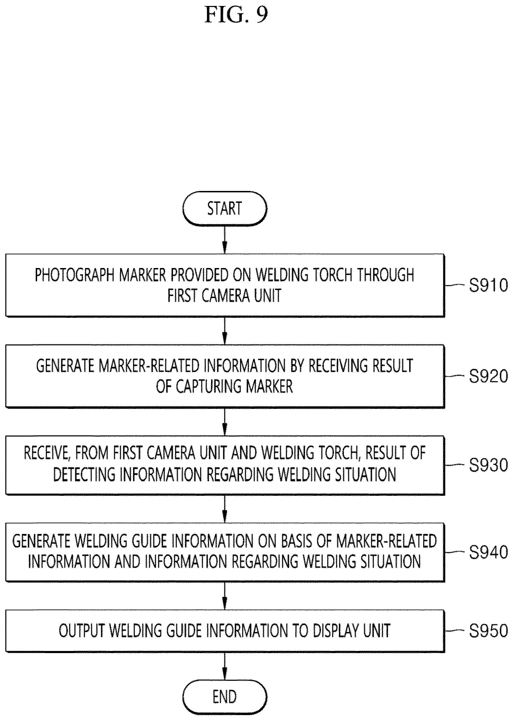

FIG. 9 is a flowchart illustrating a method of operating a welding system, according to an embodiment. The same description of FIG. 9 as the descriptions of FIGS. 1 to 8 is omitted below. The method of operating the welding system according to the present embodiment is described as being performed by the first processor 160 of the welding information providing device 100 with the help of the welding torch 200 and surrounding components.

Referring to FIG. 9, in operation S910, the first processor 160 may control an operation of the first camera unit 120 to photograph the marker 206-1 provided in the welding torch 200. Under control of the first processor 160, the first camera unit 120 may photograph the marker 206-1 included in the first panel unit 206 of the welding torch 200.

In operation S920, the first processor 160 may receive, from the first camera unit 120, an image frame obtained by photographing the marker 206-1 and generate marker-related information. In some embodiments, the marker-related information may include one or more of marker location information, torch direction information, and information regarding a distance from a welding base material to the welding information providing device 100.

In operation S930, the first processor 160 may receive a result of detecting information regarding a welding situation from one or more of the first camera unit 120, at least one sensor provided in the first sensor unit 150, and at least one sensor provided in the welding torch 200. In some embodiments, the information regarding the welding situation may include one or more of a welding location, a welding temperature, a welding direction, a welding inclination, a welding speed, and a distance between the welding base material and the welding torch 200. In an optional embodiment, the first processor 160 may calculate or generate the information regarding the welding situation by using a signal detected through one or more of the first camera unit 120, the at least one sensor provided in the first sensor unit 150, and the at least one sensor provided in the welding torch 200.

In operation S940, the first processor 160 may generate welding guide information on the basis of the marker-related information and the information regarding the welding situation. In some embodiments, the welding guide information may include one or more of an operation instruction, an operation change, and an operation stoppage. In addition, the welding guide information may include a series of information related to guiding as described above.

In operation S950, the first processor 160 may output the welding guide information as visual information to the display unit 140. In some embodiments, the first processor 160 may output the welding guide information as auditory information to a speaker.

FIG. 10 is an example diagram of a welding system according to an embodiment. The same description of FIG. 10 as the descriptions of FIGS. 1 to 9 is omitted below. Referring to FIG. 10, a welding system 2 according to an embodiment may include a welding information providing device 100, a welding torch 200, a network 300, and the welding management device 400. In some embodiments, the descriptions related to the welding information providing device 100, the welding torch 200, and the network 300 are the same as the above descriptions, and thus are omitted below.

The welding management device 400 may be connected to the welding information providing device 100 and the welding torch 200 through the network 300 and may provide the welding information providing device 100 with welding education content for guiding an operator to acquire a welding skill and perform safe welding.

In some embodiments, the welding education content may include various types of information related to a welding skill guide, welding equipment use, welding safety, welding quality management, an actual welding scenario, a visual material and video, interactive learning, and the like.

In some embodiments, the welding management device 400 may receive welding operation video data for a skilled operator and apply, to the welding education content, importance of know-how information extracted through analysis of a result of welding by the skilled operator. The welding management device 400 may build the welding education content into a database.

The welding management device 400 may receive a result of welding by the operator, which is received from the welding information providing device 100, in correspondence to the welding education content. The welding management device 400 may provide the welding information providing device 100 with welding advice information for advising on the result of welding by the operator by comparing the result of welding by the operator with the preset result of welding by the skilled operator.

In some embodiments, the welding advice information may include one or more of visual information and auditory information. In some embodiments, the welding advice information may be output to one or more of the welding information providing device 100 and a terminal (not shown) (e.g., a smartphone, a computer, or the like) of the operator.

The welding management device 400 may be a database server that provides data needed for applying various types of artificial intelligence algorithms. The welding management device 400 may predict the welding advice information by using an artificial intelligence algorithm and provide the predicted welding advice information to one or more of the welding information providing device 100 and the terminal of the operator.

Here, artificial intelligence (Al) may be a field of computer engineering and information technology that studies a method of enabling a computer to do thinking, learning, self-development, and the like that may be done with the intelligence of a human and may enable the computer to imitate an intelligent behavior of the human.

In addition, the artificial intelligence may not be present by itself, but may have many direct and indirect relationships with other fields of computer science. In particular, in modern times, attempts to introduce artificial intelligence elements in various fields of information technology and use the artificial intelligence elements for problem-solving in the fields have been highly actively made.

Machine learning may be a field of artificial intelligence and may include a field of research that gives a computer an ability to learn without an explicit program. In detail, the machine learning may refer to a technology that researches and establishes a system that, on the basis of empirical data, learns, performs prediction, and improves performance thereof, and an algorithm therefor. Algorithms of the machine learning may take a method of establishing a particular model to derive prediction or decision on the basis of input data, rather than executing strictly fixed static program instructions.

Both unsupervised learning and supervised learning may be used as a machine learning method for such an artificial neural network. In addition, a deep learning technology, which is a type of machine learning, may perform learning by going down to a deep level at multi-levels, on the basis of data. The deep learning may indicate a set of machine learning algorithms that extract core data from a plurality of pieces of data while increasing levels.

In some embodiments, the welding management device 400 may be independently present in the form of a server or may implement, in the form of an application, a welding education function for the operator, which includes the welding education content and the welding advice information provided by the welding management device 400, and load the application on the terminal of the operator.

The terminal of the operator may receive a welding education service by accessing a welding education application and/or a welding education site provided by the welding management device 400.

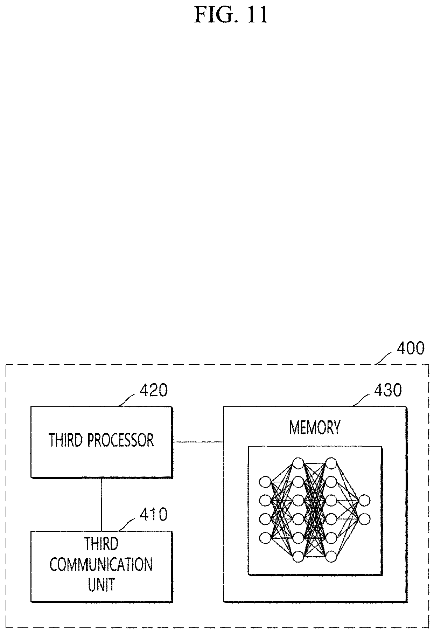

FIG. 11 is a block diagram schematically illustrating a structure of a welding management device of the welding system 2 of FIG. 10. The same description of FIG. 11 as the descriptions of FIGS. 1 to 10 is omitted below. Referring to FIG. 11, a welding management device 400 may include a third communication unit 410, a third processor 420, and a memory 430.

The third communication unit 410 may be linked with the network 300 to provide a communication interface needed to provide a signal transmitted and received among the welding information providing device 100, the welding torch 200, and the welding management device 400 in the form of packet data. Here, the communication interface may be a medium that connects the welding information providing device 100, the welding torch 200, and the welding management device 400 to one another and may include a path that provides a connection path through which the welding management device 400 may connect to one or more of the welding information providing device 100 and the welding torch 200 and then transmit and receive information thereto and therefrom. In addition, the third communication unit 410 may be an device including hardware and software needed for transmitting and receiving a signal, such as a control signal or a data signal, through a wired or wireless connection with another network device.

The third processor 420 may provide the welding information providing device 100 with welding education content for guiding an operator to acquire a welding skill and perform safe welding. In some embodiments, the welding education content may include various types of information related to a welding skill guide, welding equipment use, welding safety, welding quality management, an actual welding scenario, a visual material and video, interactive learning, and the like.

From among the welding education content, information related to the welding skill guide may include descriptions of a basic principle and various welding skills of welding. Operators may understand how to perform welding through learning about information related to the welding skill guide.

From among the welding education content, information related to the welding equipment use may include information for guiding correct use of welding equipment and tools. In detail, the information related to the welding equipment use may include information for guiding manipulation methods and maintenance methods of the welding information providing device 100 and the welding torch 200.

From among the welding education content, information related to the welding safety may include information for guiding a warning and a safety procedure regarding a risk that may occur during welding operation.

From among the welding education content, information related to the welding quality management may include information for promoting understanding of welding quality and guiding a quality management procedure and a test method.

From among the welding education content, information related to the actual welding scenario may include information for simulating an actual welding scenario or guiding actual work. Accordingly, the operator may practice how to cope with actual welding operation.

From among the welding education content, information related to the visual material and the video may include visual materials such as a picture, a graph, a drawing, and a video related to welding. Accordingly, the description of the welding may be more clearly communicated to the operator.

From among the welding education content, information related to the interactive learning may include a quiz, a simulation, an interactive exercise question, and the like. Accordingly, the degree of understanding of the operator related to welding may be improved.

The third processor 420 may receive welding operation video data for a skilled operator and apply, to the welding education content, importance of know-how information extracted through analysis of a result of welding by the skilled operator.

The third processor 420 may receive a result of welding by the operator, which is received from the welding information providing device 100, in correspondence to the welding education content. The third processor 420 may generate welding advice information for advising on the result of welding by the operator and provide the generated welding advice information to the welding information providing device 100, by comparing the result of welding by the operator with a preset result of welding by the skilled operator.

In some embodiments, the third processor 420 may provide the welding information providing device 100 with the actual welding scenario included in the welding education content. The first camera unit 120 may acquire an image frame of the result of welding by the operator by using the marker 206-1 provided in the first panel unit 206 of the welding torch 200. The third processor 420 may receive the image frame of the result of welding, which is acquired by the first camera unit 120. The third processor 420 may generate the welding advice information for advising on the result of welding by the operator and provide the welding advice information to the welding information providing device 100, by comparing the image frame of the result of welding by the operator with an image frame of the preset result of welding by the skilled operator.

The third processor 420 may evaluate accuracy, completeness, a defect rate, and the like of the welding operation and generate the welding advice information, by comparing the result of welding by the operator with the preset result of welding by the skilled operator. Here, the welding advice information may include a portion that the operator needs to improve during welding, a potential risk factor, technical advice, a suggestion for improving welding quality, and the like.

The third processor 420 may output the welding advice information to one or more of the welding information providing device 100 and a terminal of the operator.

In an optional embodiment, the third processor 420 may receive a welding result image frame corresponding to the result of welding by the operator and predict the welding advice information, by using a deep neural network model that is pre-trained to predict welding advice information by receiving a welding result image frame. Here, the deep neural network model may be a model that is trained in a supervised learning method through training data that uses a welding result image frame as an input and uses welding advice information as a label.

The third processor 420 may train an initially set deep neural network model in a supervised learning method by using labeled training data. Here, the initially set deep neural network model may be an initial model designed to be configured as a model capable of predicting welding advice information and may have parameter values that are set to random initial values. When the initial model is trained by using the above-described training data, parameter values thereof may be optimized, and thus, the initial model may be completed as a prediction model capable of accurately predicting welding advice information regarding a welding result image frame.

The third processor 420 may control an overall operation of the welding management device 400. Here, a processor may refer to, for example, a data processing device built in hardware, which has a physically structured circuit to perform a function expressed by code or instructions included in a program. Examples of the data processing device built in the hardware may include processing devices such as a microprocessor, a central processing unit, a processor core, a multiprocessor, an ASIC, and an FPGA, but the scope of the disclosure is not limited thereto.

The memory 430 may be operatively connected to the third processor 420 and may store at least one code in association with an operation performed by the third processor 420.

In addition, the memory 430 may perform a function of temporarily or permanently storing data processed by the third processor 420. Here, the memory 430 may include a magnetic storage medium or a flash storage medium, but the scope of the disclosure is not limited thereto. The memory 430 may include an internal memory and/or an external memory and may include a volatile memory such as DRAM, SRAM, or SDRAM, a nonvolatile memory such as OTPROM, PROM, EPROM, EEPROM, mask ROM, flash ROM, NAND flash memory, or NOR flash memory, a flash drive such as an SSD, a CF card, an SD card, a micro-SD card, a mini-SD card, an xD card, or a memory stick, or a storage device such as an HDD.

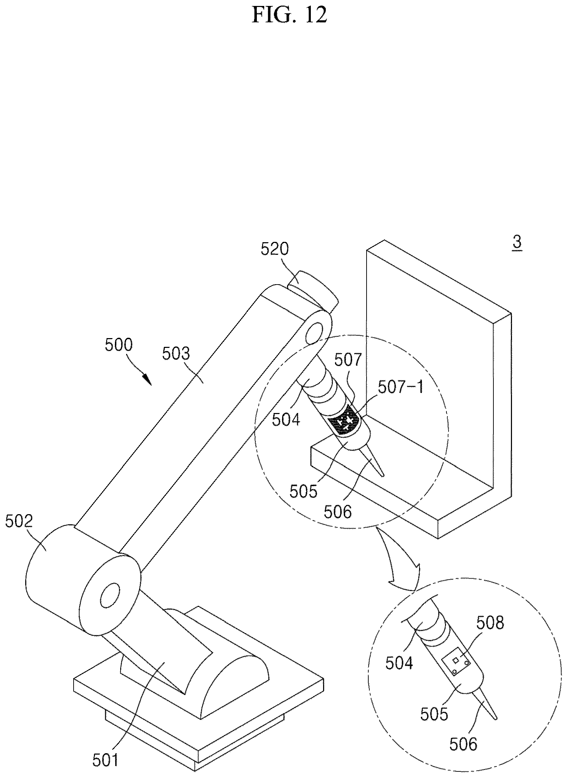

FIG. 12 is an example view of a welding environment according to an embodiment. The same description of FIG. 12 as the descriptions of FIGS. 1 to 11 is omitted below. Referring to FIG. 12, a welding system 3 according to an embodiment may include a welding robot 500.

The welding robot 500 may be a welding system for performing automatic welding and may be used to improve welding quality and improve productivity by performing repetitive and accurate work in a welding process. The welding robot 500 may be programmed, or may oversee welding operation by using a sensor and a vision system, enhance safety of an operator, and save manpower.

The welding robot 500 according to the present embodiment may include a welding leg 501, a joint portion 502, a welding body 503, a welding arm 504, a welding rod head 505, a welding rod 506, a second panel unit 507, a lighting unit 508, and a second camera unit 520.

The welding robot 500 according to the present embodiment may have a structure formed of multiple joints and may have a multi-axis structure. In the structure formed of the multiple joints, a plurality of welding legs 501 may be connected to a plurality of joint portions 502 and may respectively perform linear motion or rotational motion.

The welding leg 501 may include a hollow-type motor (not shown) having a hollow through a wire passes, a feed roller (not shown) for feeding the wire, and a speed sensor (not shown) for detecting a feed speed of the wire. The hollow-type motor may have an integrated joint structure for estimate driving. The hollow-type motor may have a through hole of a certain diameter on a central axis to allow the passage of the wire. The feed roller may be connected to a separate motor (not shown) and may provide a feed force by means of a frictional force. The speed sensor may be configured in a non-contact manner not to increase a feed load of the wire.

In some embodiments, the welding leg 501 and the joint portion 502 may be included in the welding body 503. Accordingly, the welding body 503 may move for welding. A welding arm 504 may be provided on a side surface of the welding body 503, and the welding rod head 505 and the welding rod 506 may be provided on one side of the welding arm 504. The welding rod 506 may generate an electrical arc in a welding base material and perform welding. In some embodiments, a minute three-dimensional operation by linear movement and rotational movement of the welding rod head 505 and the welding rod 506 may be performed by driving of a motor (not shown) connected by the wire.

In some embodiments, the welding rod head 505 may be provided between the welding arm 504 and the welding rod 506 connected to the welding body 503. A second panel unit 507 may be provided on an outer side of the welding rod head 505. In an optional embodiment, the second panel unit 507 may be provided on the welding arm 504.

The second panel unit 507 may be provided with a marker 507-1 for identifying a welding location. In some embodiments, the marker 507-1 may include a visual pattern or marker. The marker 507-1 may include an augmented reality (AR) marker.

The marker 507-1 may include a visually identifiable pattern. The marker 507-1 may include a unique identifier. The unique identifier may be used to identify the marker 507-1 and distinguish information or work linked to the marker 507-1. The second camera unit 520 may photograph the marker 507-1 included in the second panel unit 507.

In some embodiments, the second panel unit 507 may be provided on one or more of a plurality of surfaces surrounding the outer side of the welding rod head 505. Four second panel units 507 may be provided on a left side, a right side, an upper side, and a lower side of the guide portion 203. Accordingly, the number of markers 507-1 may also be the same as the number of the second panel units 507.

In some embodiments, the second lighting unit 508 may be provided between the welding rod head 505 and the second panel unit 507. In other words, the second lighting unit 508 may be provided underneath the second panel unit 507. The second lighting unit 508 may supply lighting to the second panel unit 507. In some embodiments, the number of the second lighting units 508 may be the same as the number of the second panel units 507.

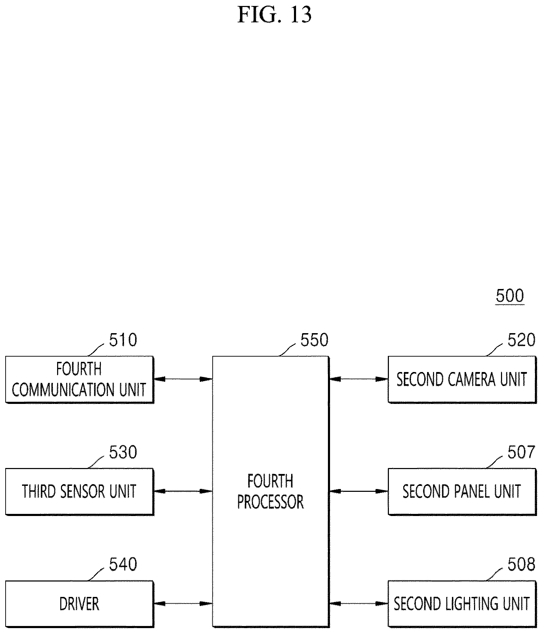

FIG. 13 is a block diagram schematically illustrating a structure of a welding robot of the welding system 3 of FIG. 12. The same description of FIG. 13 as the descriptions of FIGS. 1 to 12 is omitted below. Referring to FIG. 13, a welding robot 500 may include a fourth communication unit 510, a second camera unit 520, a third sensor unit 530, a driver 540, and a fourth processor 550.

The fourth communication unit 510 may be linked with the network 300 to provide a communication interface needed to provide a signal transmitted and received between the welding robot 500 and a welding management device 400 described below in the form of packet data. The fourth communication unit 510 may transmit information regarding a welding situation to the welding management device 400 and receive a command for controlling the welding robot 500 from the welding management device 400. In some embodiments, the command for controlling the welding robot 500 may include welding guide information.

The second camera unit 520 may capture a second panel unit 507 provided on an outer side of the welding rod head 505. Here, the second panel unit 507 may include the marker 507-1, and thus, the second camera unit 520 may generate a marker image frame. The second camera unit 520 may include, for example, a camera provided in a smartphone (not shown). In some embodiments, the second camera unit 520 may include at least one camera and may capture an image of a welding operation site. In some embodiments, the second camera unit 520 may include a vision sensor that monitors a welding base material and the welding rod 506 in real time and captures an image.

In some embodiments, the marker 507-1 may include a visual identifier or marker used in welding operation. The marker 507-1 may identify a welding location or include information needed for work. The marker 507-1 may mainly include a particular pattern, symbol, or identifier.

The third sensor unit 530 may include a plurality of sensor modules configured to detect various types of information regarding an operation of the welding robot 500 and the welding site and acquire information regarding a welding situation. Here, the information regarding the welding situation may include a welding location, a welding temperature, a welding direction, a welding inclination, and a welding speed for real-time welding operation, a distance between a welding base material and the welding rod 506, and the like. In addition, the third sensor unit 530 may include an optical sensor configured to detect the light intensity at least within a welding operation region.

The third sensor unit 530 may include a force and torque sensor for measuring a force and torque generated during the welding operation. Accordingly, welding quality may be controlled by adjusting pressure of the welding rod 506 and monitoring a load generated during the welding operation. The third sensor unit 530 may include an accelerometer and a gyroscope that track and control a movement and direction of the welding robot 500. Accordingly, an exact location of the welding robot 500 may be identified and stability may be maintained during the welding operation. The third sensor unit 530 may measure the distance between the welding base material and the welding rod 506. Accordingly, the welding robot 500 may be prevented from colliding with the welding base material and may accurately access a welding point. The third sensor unit 530 may include a gas sensor that detects and monitors a gas leak occurring during the welding operation. The type of third sensor unit 530 is not limited to the above-described examples, and the third sensor unit 530 may include any sensor capable of detecting various types of information regarding the operation of the welding robot 500 and a welding site and acquiring the information regarding the welding situation.

The driver 540 may drive the welding robot 500 under control of the fourth processor 550. The driver 540 may control motion of the welding robot 500 by adjusting a location, speed, and acceleration of the welding robot 500 under control of the fourth processor 550. In some embodiments, the driver 540 may include a servo motor (not shown) that moves each joint or motion axis of the welding robot 500 and controls a location, a speed, torque, and the like. In addition, the driver 540 may include a step motor (not shown), a hybrid motor (not shown), a linear motor (not shown), a hydraulic and pneumatic system (not shown), and the like, which control the motion of the welding robot 500.

The fourth processor 550 may control an operation of the welding robot 500. The fourth processor 550 may receive, from the second camera unit 520, an image frame obtained by photographing the marker 507-1 and generate marker-related information. Here, the marker-related information may include one or more of marker location information, torch direction information, and information regarding a distance from the welding base material to a welding information providing device.

The fourth processor 550 may receive a result of detecting the welding situation from one or more of the second camera unit 520 and the third sensor unit 530. Here, the result of detecting the welding situation may include one or more of a welding location, a welding temperature, a welding direction, a welding inclination, a welding speed, and a distance between the welding base material and the welding rod 506.

The fourth processor 550 may generate welding guide information including one or more of an operation instruction, an operation change, and an operation stoppage based on marker-related information and information about welding situations.

The fourth processor 550 may control the operation of the welding robot 500 in response to the welding guide information. Controlling the operation of the welding robot 500 may include controlling movement of the welding body 503 and controlling an operation of the welding rod 506.

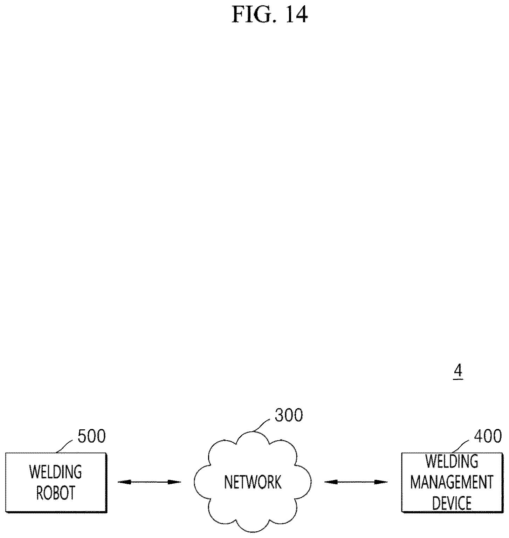

FIG. 14 is an example diagram of a welding system according to an embodiment. The same description of FIG. 14 as the descriptions of FIGS. 1 to 13 is omitted below. Referring to FIG. 14 , a welding system 4 according to an embodiment may include a network 300, a welding management device 400, and a welding robot 500.

In some embodiments, the welding management device 400 may be a server or an external device for controlling an operation of the welding robot 500.

The welding management device 400 may receive, from the welding robot 500, an image frame obtained by capturing a marker and generate marker-related information. The welding management device 400 may receive, from the welding robot 500, a result of detecting information regarding a welding situation.

The welding management device 400 may generate welding guide information on the basis of the marker-related information and the information regarding the welding situation. The welding management device 400 may generate a signal for controlling the operation of the welding robot 500, on the basis of the welding guide information and transmit the generated signal to the welding robot 500.

Embodiments according to the disclosure described above may be implemented in the form of a computer program that may be executed on a computer via various types of components, and the computer program may be recorded on a computer-readable medium. Here, the medium may include magnetic media, such as a hard disk, a floppy disk, and a magnetic tape, optical recording media, such as CD-ROM and DVD, magnetooptical media, such as a floptical disk, and hardware devices, such as ROM, RAM, and flash memory devices specially configured to store and execute program instructions.

Meanwhile, the computer program may be specially designed and configured for the disclosure, or may be known to and used by those skilled in the art of the computer software field. Examples of the computer program may include not only machine language code generated by a compiler but also high-level language code that may be executed by a computer by using an interpreter or the like.

In the description of the disclosure (particularly, in claims), the use of the term "the" and similar indicative terms may correspond to both the singular and the plural forms. In addition, when a range is described in the disclosure, the disclosure includes the application of individual values within the range (unless there is a statement to the contrary), and each individual value constituting the range is described in the detailed description of the disclosure.

The operations constituting the method according to the disclosure may be performed in any appropriate order unless an order of the operations is explicitly stated or stated to the contrary. The disclosure is not necessarily limited according to the order of description of the operations. The use of all examples or example terms (e.g., and the like) in the disclosure is simply to describe the disclosure in detail, and the scope of the disclosure is limited due to the examples or example terms unless limited by claims. In addition, those skilled in the art may appreciate that various modifications, combinations and changes may be made according to design conditions and factors within the scope of the appended claims or equivalents thereof.

Therefore, the spirit of the disclosure should not be determined while limited to the embodiments described above, and all scopes equivalent to or equivalently changed from the claims as well as the claims described below should fall within the scope of the spirit of the disclosure.

According to the disclosure, the disclosure is to improve welding accuracy and welding quality by tracking an exact location of a welding portion and adjusting welding operation accordingly.

Also, safety of a welding operation environment may be improved and safety of a welding operator may be secured.

In addition, by educating and training a welding operator on a safe and effective welding skill, risks of an accident and injury may be reduced, and the welding operator may be helped to perform accurate and consistent welding.

In addition, welding time and labor may be reduced by quickly and accurately performing the welding operation through welding automation.

The effects of the disclosure are not limited to those mentioned above, and other effects not mentioned may be clearly understood by one of ordinary skill in the art from the following description.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims .

## Claims

1. A welding system comprising: a welding information providing device configured to generate and display information related to welding; and
a welding torch configured to generate an electric arc in a welding base material, wherein
the welding torch comprises
a first panel unit having mounted thereon a marker configured to identify a welding location.

2. The welding system of claim 1, wherein
the first panel unit is
provided on an outer side of a guide portion located between a torch head and a back cap.

3. The welding system of claim 2, wherein
the first panel unit is
provided on one or more of a plurality of surfaces surrounding the outer side of the guide portion.

4. The welding system of claim 2, further comprising
a lighting unit provided between the guide portion and the first panel unit and configured to supply lighting to the first panel unit.

5. The welding system of claim 4, wherein
a number of lighting units is equal to a number of first panel units.

6. The welding system of claim 2, wherein
the welding information providing device comprises:
a first camera unit configured to acquire a welding image of welding operation;
a display unit configured to display the welding image; and
a first processor, wherein
the first processor is configured to:
generate marker-related information comprising one or more of marker location information, torch direction information, torch angle information, and information regarding a distance from the welding base material to the first camera unit, by using an image of the first panel unit captured by the first camera unit and preset distance information between a welding rod and the first panel unit;
receive, from one or more of the first camera unit, a first sensor unit, and a second sensor unit provided in the welding torch, a result of detecting information regarding a welding situation comprising one or more of a welding location, a welding direction, a welding angle, a welding inclination, a welding speed, and a distance between the welding base material and the welding torch;
generate welding guide information comprising one or more of an operation instruction, an operation change, and an operation stoppage, on the basis of the marker-related information and the information regarding the welding situation; and
output the welding guide information to the display unit.

7. The welding system of claim 1, further comprising
a welding management device connected to the welding information providing device and the welding torch through a network and configured to provide the welding information providing device with welding education content guiding an operator to acquire a welding skill and perform safe welding.

8. The welding system of claim 7, wherein
the welding management device is configured to
provide the welding information providing device with welding advice information advising on a result of welding by the operator by comparing the result of welding by the operator, which is received from the welding information providing device, with a preset result of welding by a skilled operator.

9. The welding system of claim 7, wherein
the welding management device comprises
a third processor configured to predict welding advice information by receiving a welding result image frame corresponding to the result of welding by the operator received from the welding information providing device, by using a deep neural network model pre-trained to predict welding advice information by receiving a welding result image frame, wherein
the deep neural network model is
a model trained in a supervised learning method through training data that uses a welding result image frame as an input and uses welding advice information as a label.

10. A welding system comprising: a welding body comprising multiple axes and moving for welding; and
a welding rod extending from the welding body and configured to generate an electric arc in a welding base material, wherein
the welding rod comprises
a second panel unit having mounted thereon a marker configured to identify a welding location.

11. The welding system of claim 10, wherein
the second panel unit is
provided on an outer side of a welding rod head surrounding one side of the welding rod.

12. The welding system of claim 11, wherein
the second panel unit is
provided on one or more of a plurality of surfaces surrounding the outer side of the welding rod head.

13. The welding system of claim 11, further comprising
a lighting unit provided between the outer side of the welding rod head and the second panel unit and configured to supply lighting to the second panel unit.

14. The welding system of claim 13, wherein
a number of lighting units is equal to a number of second panel units.

15. The welding system of claim 10, further comprising:
a second camera unit provided on the welding body and configured to acquire a welding image of welding operation; and
a fourth processor, wherein
the fourth processor is configured to:
generate marker-related information comprising one or more of marker location information, torch direction information, torch angle information, and information regarding a distance from the welding base material to the first camera, by using an image of the second panel unit captured by the second camera unit and preset distance information between the welding rod and the second panel unit;
receive, from one or more of the second camera unit and a third sensor unit, a result of detecting information regarding a welding situation comprising one or more of a welding location, a welding direction, a welding angle, a welding inclination, a welding speed, and a distance between the welding base material and the welding rod;
generate welding guide information comprising one or more of an operation instruction, an operation change, and an operation stoppage, on the basis of the marker-related information and the information regarding the welding situation; and
control movement of the welding body and an operation of the welding rod in correspondence to the welding guide information.
